# EUROPEAN PATENT SPECIFICATION

(11) **EP 1 975 185 B1**
(45) Date of publication and mention of the grant of the patent: **13.10.2010**
(21) Application number: 07397006.3
(22) Date of filing: 30.03.2007
(51) Int. Cl.: C08F 265/02, C08F 279/02, C08F 285/00, C08F 257/02, C08F 287/00, C08F 271/02, D21H 19/58, D21H 19/62, D21H 21/18, C09D 151/00, C08L 51/00, C08L 55/02, C08L 51/04

(54) **Grafted interpolymer latex and method of preparing thereof**
Gepfropfter Interpolymerlatex und Herstellungsverfahren dafür
Latex d' interpolymère greffé et son procédé de préparation

(43) Date of publication of application: 01.10.2008
(73) Proprietor: M-real Oyj, 02100 Espoo (FI); Kemira Oyj, 00180 Helsinki (FI); PolymerLatex GmbH, 45768 Marl (DE)
(72) Inventor: Sahlberg, Teppo, FI-44120, Äänekoski (FI); Hemmes, Jan-Luiken, D-45768, Bergisch Gladbach (DE); Ahlgren, Jonni, FI-02200, Espoo (FI); Schulze, Uwe, D-40489, Düsseldorf (DE); Eigen, Claudia, D-46284, Dorsten (DE)
(74) Representative: Sundman, Patrik Christoffer

(56) References cited:
- EP-A- 0 600 592
- WO-A-96/19512
- GB-A- 1 098 021
- US-A1- 2007 031 692
- DATABASE WPI Week 197801 Derwent Publications Ltd., London, GB; AN 1978-01254A XP002441156 -& JP 52 138530 A (MITSUBISHI RAYON CO LTD) 18 November 1977 (1977-11-18)
- DATABASE WPI Week 200563 Derwent Publications Ltd., London, GB; AN 2005-609083 XP002441157 -& JP 2005 220492 A (MITSUBISHI PAPER MILLS LTD) 18 August 2005 (2005-08-18)

## Description

The present invention relates to a method of grafting an anionic organic polymer to an organic polymer in latex form, and to an aqueous dispersion comprising graft polymer particles where grafting has been effected using such a method.

The use of aqueous dispersions of organic polymers, commonly known as polymer latices, is well known in the art for numerous applications, and in particular for the provision of the binder material in various coatings and adhesives applications. One application of interest is the use of polymer latices as binder in coating colors for the coating of paper and similar cellulosic materials. Coating colors are applied to the surface of the paper to improve its properties, particularly printability, gloss and optical properties. Typically, a coating color is applied as an aqueous dispersion comprising pigments, a dispersing agent, a binder, such as a polymer latex, and other additives. Unfortunately, the individual components of a latex-containing coating color do not interact with each other in a ideal manner. As a result, there is a considerable loss of latex during the application of the coating color to the paper due to the penetration of the latex into the porous paper.

Thus, it is the object of the present invention to provide a latex system that can be employed as a binder in coating colors and that improves the interaction of the latex with other components of the coating color, especially with the pigments, and consequently, avoids loss of latex and provides a more effective use of the latex. It is understood that the properties of the coated paper should not be impaired. It would be advantageous if at least some of the paper properties could even be improved.

The object is met by an aqueous dispersion comprising graft polymer particles wherein the graft substrate of the graft polymer particles comprises a latex polymer and the side chains of the graft polymer particles comprise an anionic organic polymer characterized in that the anionic organic polymer is
(i) an anionic homopolymer or anionic random copolymer wherein at least 70 mole % of the repeating units are repeating units that bear at least one acid group or acid salt group or
(ii) a graft or block copolymer comprising a segment consisting of a anionic homopolymer or anionic random copolymer as defined in (i),
and the latex polymer is derived from one or more conjugated diene monomers and optionally further comonomers.

The present invention also relates to a method of grafting an anionic organic polymer to an organic polymer in latex form, which method comprises forming a water-based mixture of (1) a latex of an organic polymer, (2) an anionic organic polymer, and (3) a free radical initiator, and effecting grafting between said latex polymer and said anionic organic polymer **characterized in that** the anionic organic polymer is
(i) an anionic homopolymer or anionic random copolymer wherein at least 50 mole % of the repeating units are repeating units that bear at least one acid group or acid salt group or
(ii) a graft or block copolymer comprising a segment consisting of a anionic homopolymer or anionic random copolymer as defined in (i).

The present invention is further directed to an aqueous dispersion comprising graft polymer particles which dispersion is obtainable by the above method.

The present invention is based on the discovery that a modified polymer latex wherein a dispersing agent, i.e. an anionic organic polymer, is grafted to the latex polymer significantly improves the pigment-latex interaction in a coating color or any other similar pigment dispersion. Moreover, it is the merit of the present inventors to have developed a new and convenient method for preparing the graft polymer latex.

WO-A-96/19512 discloses an aqueous polymer composition comprising a water-soluble oligomer(s) grafted to a latex polymer(s) and a method of grafting. However, latex-pigments interactions are not discussed in this reference as the patent application is not concerned with the effect of the graft polymer latex in a pigment-containing composition. The water-soluble oligomers to be grafted to the latex polymer are described broadly and do not include highly charged anionic polymer as defined in the present invention.

US-A-2007/031692 discloses a method for dissolving an anionic polymer in a polymer dispersion or effecting emulsion polymerization of these polymers.

JP-A-2005 220492 discloses a mixture of a pigment dispersant and a latex binder.

JP-A-52138530 discloses an aqueous coating composition containing a graft polymer obtained by grafting a water-soluble polymer, which contains 10 to 50 mole% carboxyl groups, with a latex rubber polymer.

GB-A-1 098 021 discloses a graft polymerization reaction utilizing a latex polymer, which is obtained by reacting a mixture of reactants in toluene.

The graft substrate of the graft polymer particles according to the present invention comprises, preferably consists of a latex polymer. The term "latex polymer" is meant to include any polymer that forms a colloidal dispersion of polymer particles in an aqueous medium; the aqueous polymer dispersion being known in the art as "polymer latex". Polymer latices are typically formed by emulsion polymerization but may also be prepared by dispersing a preformed polymer in the aqueous medium.

The latex polymer used in the present invention is typically a hydrophobic emulsion polymer, this type of polymer being well understood by those skilled in the art. Generally speaking it may be considered herein as a water-insoluble polymer whose water-insolubility is maintained throughout the pH range. The hydrophobic nature of the polymer is achieved by virtue of the polymer containing a sufficient concentration of at least one hydrophobic monomer (i.e. in polymerized form) to render the polymer water-insoluble throughout the pH range. Thus, most preferably, the emulsion polymer employed in the invention process is insoluble in the aqueous medium of that polymerization process regardless of any adjustments in pH to which the medium could be subjected.

The monomer system employed for the formation of the latex polymer is preferably such that the resulting polymer is preferably hydrophobic as described. It is further preferred that the latex polymer bears acid groups, preferably carboxylic acid groups, and/or the corresponding salt groups. This means that the latex polymer is preferably a copolymer comprising units derived from acid-functional monomers included as comonomers, although at such a level (depending on their nature) as to not affect the preferred hydrophobic character of the resulting polymer. The term "acid-functional" monomer is meant to include monomers that comprise at least one acid group or acid salt group as well as precursor monomers yielding an acid group (such as an acid anhydride or an acid chloride). Generally speaking, the monomer system used to make the latex polymer will usually comprise from 1 to 20 weight % of any acid-functional monomer(s), preferably from 1 to 10 weight %, more preferably from to 3 to 7 weight %, and most preferably from 4 to 6 weight %. Of course, the monomer system may also be free of acid-functional monomer(s).

In a preferred embodiment the latex polymer is derived from one or more radically polymerizable monomers.

Illustrative examples of non acid-functional radically polymerizable monomers include conjugated dienes, such as butadiene, isoprene, 2,3-dimethyl-1,3-butadiene, and chloroprene; monovinylidene aromatic monomers, i.e. styrenes, such as styrene itself, α-methylstyrene, o-, m- and p-methylstyrene, o-, m-, and p-ethylstyrene, t-butylstyrol, p-chlorostyrene, and p-bromostyrene; acrylic and methacrylic esters, typically normal and branched acrylic and methacrylic esters of alkanols (usually C₁ to C₂₀, preferably C₁ to C₁₂) and cycloalkanols (usually C₅-C₂₀ ring carbons, preferably C₁ to C₁₂ ring carbons), such as methyl methacrylate, ethyl methacrylate, isopropyl methacrylate, n-butyl methacrylate, sec-butyl methacrylate, t-butyl methacrylate, isobutyl methacrylate, 2-methylbutyl methacrylate, 4-methyl-2-pentyl methacrylate, hexyl methacrylate, 2-ethylhexyl methacrylate, isooctyl methacrylate, cetyl methacrylate, isobornyl methacrylate and cyclohexyl methacrylate and the corresponding acrylates; alkoxy-C₁-C₁₀-alkyl acrylates and methacrylates, preferably alkoxy-C₁-C₈-alkyl acrylates and methacrylates, such as methoxyethyl acrylate, ethoxyethyl acrylate, butoxyethyl acrylate, methoxybutyl acrylate and methoxyethoxyethyl acrylate and the corresponding methacrylates; vinyl esters, such as vinyl acetate, vinyl propionate, vinyl butyrate, vinyl benzoate, vinyl 2-ethylhexanoate, vinyl stearate and the vinyl esters of versatic acid; vinyl amines, such as vinyl pyridines; ethylenically unsaturated halides, such as vinyl chloride, vinylidene chloride and vinyl fluoride; ethylenically unsaturated nitriles, such as acrylonitrile, methacrylonitrile and fumaronitrile; amides of ethylenically unsaturated carboxylic acids, such as acrylamide, methacrylamide, and diacetone acrylamide, and hydroxyalkyl (meth)acrylate monomers, typically hydroxyalkyl acrylate and methacrylate monomers which are based on ethylene oxide, propylene oxide and other higher alkylene oxides or mixtures thereof, such as hydroxyethyl acrylate, hydroxypropyl acrylate, hydroxyethyl methacrylate, hydroxypropyl methacrylate and hydroxybutyl acrylate.

According to a preferred embodiment the backbone of the latex polymer contains double bonds, i.e. the latex polymer is preferably derived from at least one conjugated diene monomer, i.e. at least one 1,3-diene monomer, such as butadiene, isoprene, 2,3-dimethyl-1,3-butadiene, and chloroprene, preferably butadiene, and optionally further comonomers. Typically, the monomer system used to make the latex polymer will comprise from 20 to 70 weight % of diene monomer(s), preferably from 20 to 65 weight %, more preferably from 20 to 55 weight %, even more preferably from 30 to 50 weight %, and most preferably from 30 to 45 weight %.

Acid-functional radically polymerizable monomers typically include ethylenically unsaturated monocarboxylic acids, such as acrylic acid, methacrylic acid, and crotonic acid; ethylenically unsaturated dicarboxylic acids and half esters and anhydrides thereof, such as maleic acid, maleic acid anhydride, fumaric acid, and itaconic acid; and ethylenically unsaturated sulfonic acids, such as styrene p-sulfonic acid (or correspondingly styrene p-sulfonyl chloride). An acid group-bearing monomer can be polymerized as the free acid or as a salt, e.g. the ammonium or alkali metal salts of ethylmethacrylate-2-sulfonic acid or 2-acrylamido-2-methylpropane sulfonic acid, or the corresponding free acids.

According to one embodiment the latex polymer is derived from monomers comprising at least one conjugated diene monomer, such as butadiene; at least one monovinylidene aromatic monomer, such as styrene, and optionally at least one acrylic-type monomer, such as (meth)acrylic acid or (meth)acrylate. Typically, the monomers comprise from 20 to 70 weight % of conjugated diene monomer(s), from 10 to 80 weight % of monovinylidene aromatic monomer(s) and from 0 to 70 weight % of acrylic-type monomers.

Preferably, the latex polymer is derived from one or more monomers selected from styrene, butadiene, acrylic acid, methacrylic acid, maleic acid, fumaric acid, itaconic acid, acrylonitrile, acrylamide, chloroprene, vinylpyridines, acrylates, and methacrylates. More preferably, the latex polymer is derived from at least two monomers comprising butadiene as one comonomer; even more preferably the latex polymer is derived from monomers comprising butadiene, styrene and optional comonomers. Still more preferred is a latex polymer which is derived from a monomers comprising butadiene, styrene, a carboxyl-functional ethylenically unsaturated monomer, and optional comonomers, preferably acrylonitrile and/or acrylamide; said latex polymer being known as carboxylated styrene/butadiene copolymer. More preferably, the latex polymer is derived from monomers consisting of butadiene, styrene, and a carboxyl-functional ethylenically unsaturated monomer. Most preferably, the latex polymer is a styrene/butadiene/(meth)acrylic acid (preferably acrylic acid) copolymer.

Typical monomer ranges for the preferred copolymer are 40 to 70 weight % of styrene, 20 to 60 weight % of butadiene, 0 to 10 weight % of acrylic acid, 0 to 15 weight % of acrylonitrile, and 0 to 2 weight % of acrylamide; more preferably 40 to 70 weight % of styrene, 20 to 60 weight % of butadiene, 1 to 10 weight % of acrylic acid, 0 to 15 weight % of acrylonitrile, and 0 to 2 weight % of acrylamide, and most preferably 40 to 70 weight % of styrene, 20 to 60 weight % of butadiene, and 1 to 10 weight % of acrylic acid.

The Tg of the latex polymer may vary between wide limits depending upon the intended application, although a common range will be -50 to 150°C, more preferably -10 to 70°C.

The latex polymers are prepared according to conventional preparation methods. According to one non-limiting example the latex polymer is prepared by radical emulsion polymerization as follows: The desired monomers (i.e. monomers corresponding to the latex polymer), water, optionally one or more stabilizing emulsifiers, optional functional additives to control the reaction (modifiers, seed particles etc.) and a water soluble polymerization initiator are brought into the reactor with heat flow and pressure control. The system is heated to decompose the initiator and as the radical chain reaction starts the temperature is well controlled by heat exchange, agitation and infeed of additional monomers. Examples of common radical initiator are sodium and potassium persulfate although but many others of the type mentioned below with respect to the grafting reaction can be used as well. At the end of the reaction all monomers are consumed and additional radicals may be introduced to terminate the reaction. The reaction product is then treated to eliminate residual monomers (stripping) or byproducts, filtered to free the product of coagulum and, if necessary, solids content and pH are adjusted. Preparation methods for polymer latices are well known to the person skilled in the art and a more detailed description of this and other preparation methods is not considered necessary.

The side chains of the graft polymer particles according to the present invention comprise, preferably consist of an anionic organic polymer. The anionic organic polymer is either (i) an anionic homopolymer or anionic random copolymer wherein at least 50 mole % of the repeating units are repeating units that bear at least one acid group or acid salt group or (ii) a graft or block copolymer comprising a segment consisting of a anionic homopolymer or anionic random copolymer as defined in (i). Thus, the anionic organic polymer is a highly charged polymer. The anionic organic polymers that are useful in one embodiment of the present invention have a considerable dispersing effect and may be used as conventional dispersing agents in their "free" form (i.e. not grafted to the latex polymer). However, the dispersing effect of the "free" anionic organic polymers is not mandatory for the present invention.

Preferably, the anionic organic polymers in their "free" form are water-soluble.

The term "random copolymer" is intended to also embrace alternating copolymers and is used to describe all copolymers that are not block or graft copolymer.

For the ease of reference, the anionic homopolymer or anionic random copolymer wherein at least 50 mole % of the repeating units are repeating units that bear at least one acid group or acid salt group is designated "charged polymer section" in the following, either it constitutes the complete anionic organic polymer (according to alternative (i)) or it constitutes only a segment of the anionic organic polymer, i.e. it is part of a graft or block copolymer (according to alternative (ii)). Preferably, at least 70 mole %, more preferably at least 80 mole % and most preferably 100 mole % of the repeating units of the charged polymer section are repeating units that bear at least one acid group or acid salt group.

The anionic charge of the anionic organic polymer, i.e. the charged polymer section, is provided by acid groups and/or the their corresponding salt forms. Illustrative examples include carboxylic acid groups, sulfonic acid groups, phosphorous-containing acid groups, including the corresponding salt forms of any of said acid groups, and mixtures of any of said groups.

In a preferred embodiment the charged polymer section is derived from one or more radically polymerizable monomers. More preferably, the charged polymer section is derived from one or more monomers selected from
(a) anionic ethylenically unsaturated monomers and precursors thereof,
(b) functional ethylenically unsaturated monomers that create anionic charge after hydrolysis of the resulting polymer, and
(c) copolymerizable ethylenically unsaturated monomers that are different from (a) and (b),
provided that the charged polymer section is derived from at least one monomer of type (a) or (b) and the sum of monomers of type (a) and (b) amounts to at least 50 mole % of the total monomers. Preferably the sum of monomers of type (a) and (b) amounts to at least 70 mole %, more preferably to at least 80 mole % and most preferably the sum of monomers of type (a) and (b) makes up 100 mole % of the total monomers.

Type (a) monomers are anionic ethylenically unsaturated monomers, such as ethylenically unsaturated organic acids and their salt forms, and precursors thereof. Precursors of anionic ethylenically unsaturated monomers are monomers that are converted to anionic ethylenically unsaturated monomers immediately or during polymerization, such as acid anhydrides and acid chlorides. Type (a) include, e.g. ethylenically unsaturated carboxylic acids, such as ethylenically unsaturated monocarboxylic acids and dicarboxylic acids; ethylenically unsaturated sulfonic acids; ethylenically unsaturated monomers comprising phosphorous-containing acidic groups, including their corresponding salt forms, and ethylenically unsaturated carboxylic acid anhydrides. Illustrative examples include acrylic acid, methacrylic acid, maleic acid, fumaric acid, itaconic acid, mesaconic acid, citraconic acid, methylene malonic acid, the corresponding anhydrides of said carboxylic acids, acrylamido methylpropane sulfonic acid, styrene sulfonic acid, vinyl sulfonic acid, vinyl phosphonic acid, and ethylene glycol methacrylate phosphate. It is understood that the salt forms of said acids are also included.

Type (b) monomers are functional ethylenically unsaturated monomers that create anionic charge after hydrolysis of the resulting polymer. Type (b) monomers include e.g. amides, nitriles, and esters of ethylenically unsaturated mono or dicarboxylic acids. Illustrative examples include acrylamide, methacrylamide, acrylonitrile, alkyl and hydroxyalkyl esters of unsaturated mono and dicarboxylic acids.

Type (c) monomers are ethylenically unsaturated monomers that are copolymerizable with type (a) and/or type (b) monomers but are different from type (a) and type (b) monomers. Type (c) monomers include e.g. styrenes, vinyl esters, vinyl ethers, N-vinylamides, and N-vinylamines. Illustrative examples include styrene, vinyl formate, vinyl acetate, vinyl propionate, vinyl butyrate, methyl vinyl ether, N-vinylformamide, N-vinylacetamide, N-methyl-N-vinylformamide and N-vinylpryrrolidone.

Preferably, the charged polymer section is derived from one or more type (a) monomer monomers only; maleic acid, maleic acid anhydride and acrylic acid being the preferred monomers. More preferably, the charged polymer section is acrylic acid homopolymer or an acrylic acid/maleic acid copolymer, and most preferably an acrylic acid/maleic acid copolymer. Typical monomer ranges for the preferred (co)polymer are 40 to 100 mole %, preferably 50 to 80 mole %, more preferably 55 to 70 mole % of acrylic acid and 0 to 60 mole %, preferably 30 to 50 mole %, more preferably 30 to 45 mole % of maleic acid.

By mixing various monomers, the number of acid groups and/or acid salt groups per g of the charged polymer section can be set at a predetermined level. For the ease of reference, the acid groups and acid salt groups are both designated "acid groups" in this paragraph irrespective whether the acid groups are present in their protonated or dissociated form (depending for example on the pH value). The number of acid groups per g is determined by the type (i.e. molecular weight and number of acid groups on the monomer) and amount of acid monomer units forming the charged polymer section. It is understood that di- and tricarboxylic acid monomers will increase the number of acid groups per g compared to a polymer primarily derived from monocarboxylic acid monomers. Thus, to mention one example, an acrylic acid homopolymer has about 13.9 millimoles of acid groups per g. Higher numbers of charged groups in an acrylic acid polymer can then be obtained by incorporating units of dicarboxylic acids, such as maleic acid. For example, at an equal weight ratio of acrylic acid to maleic acid monomers (weight ratio of 50:50 corresponding to a molar ratio of 62:38) the number of acid groups is about 15.6 mmol/g. As another example, a sodium acrylate homopolymer has about 10.6 millimoles of acid groups per g, but the number of acid groups per g will be lower in a copolymer consisting of sodium acrylate and an uncharged comonomer . The number of acid groups of the charged polymer section is typically at least 7 mmol/g of charged polymer section, preferably at least 10 mmol/g, more preferably at least 12 mmol/g, even more preferably at least 14 mmol/g and most preferably at least 15 mmol/g. The upper limit of the number of acid groups of the charged polymer section is determined by the maximum amount of a highly charged acid monomer that can be incorporated into the anionic organic polymer.

As already mentioned above, in one embodiment of the present invention the acid groups imparting the anionic charge to the anionic organic polymer are partly or completely present in their salt forms. Typically, the acid groups have been partially or totally neutralized using any alkali metal, ammonium or alkaline earth metal bases or organic amines or mixtures thereof. Examples of suitable bases include sodium hydroxide, potassium hydroxide, sodium carbonate, potassium carbonate, sodium bicarbonate, potassium bicarbonate, magnesium oxide, magnesium hydroxide, calcium oxide, calcium hydroxide, calcium carbonate, barium hydroxide, ammonia, and amines, such as dimethylamine, trimethylamine, diethylamine, triethylamine, n-butylamine, dibutylamine, hexylamine, ethanolamine, diethanolamine, triethanolamine, and morpholine.

Typically, the number average molecular weight Mₙ of the anionic organic polymer is within the range of from 500 to 500,000, preferably from 500 to 100,000 and more preferably from 1,000 to 100,000. According to one embodiment the Mₙ is greater than 2,000 and up to 100,000 and preferably within the range of from 5,000 to 100,000.

In one preferred embodiment of the present invention the charged polymer section as defined above constitutes the complete anionic organic polymer, i.e. the anionic organic polymer is a homopolymer or random copolymer wherein at least 50 mole % of the repeating units are repeating units that bear at least one acid group or acid salt group.

In another embodiment the charged polymer section constitutes only a part of the anionic organic polymer, i.e. the anionic organic polymer is a graft or block copolymer comprising a segment consisting of a homopolymer or random copolymer wherein at least 50 mole % of the repeating units are repeating units that bear at least one acid group or acid salt group. In addition to the charged polymer section, the graft or block copolymer comprises at least one further, typically hydrophilic segment. Preferably, the at least one further segment is an uncharged segment being part of a graft copolymer. Examples of the uncharged segments include poly(alkylene oxide)s, such as a poly(ethylene oxide) and poly(propylene oxide); and poly(vinyl alcohol)s; preferably the uncharged segment is a poly(ethylene oxide) chain.

In a preferred embodiment the segment consisting of a homopolymer or random copolymer (the "charged polymer section") constitutes at least 50 weight % of the anionic organic polymer, more preferably at least 55 weight %, more preferably at least 60 weight %, and most preferably at least 65 weight % of the anionic organic polymer.

The anionic organic polymers are prepared according to conventional preparation methods that are well known to the person skilled in the art and a detailed description of said preparation methods is not considered necessary. This also applies to the anionic organic polymers being graft or block copolymers. One common method of preparing said graft or block copolymers is by polymerizing the monomers forming the charged polymer section in the presence of the preformed polymer forming the further segment of the graft or block copolymer.

The relative amounts of the anionic organic polymer and the latex polymer in the graft polymer particles are typically 0.5 to 20 parts by weight of anionic organic polymer, preferably 1 to 15 parts by weight of anionic organic polymer, more preferably 1 to 10 parts by weight of anionic organic polymer, and most preferably 1 to 7 parts by weight of anionic organic polymer, each per 100 parts by weight of latex polymer.

In a preferred embodiment of the present invention the graft polymer particles comprise an acrylic acid/maleic acid copolymer or its salt form grafted to a carboxylated styrene/butadiene copolymer (preferably styrene/butadiene/acrylic acid copolymer). In a further embodiment of the present invention the graft polymer particles comprise a poly(ethylene oxide)-modified acrylic acid/maleic acid copolymer or its salt from grafted to a carboxylated styrene/butadiene copolymer (preferably styrene/butadiene/acrylic acid copolymer).

After detailed description of the latex polymer and the anionic organic polymer being both parts of the graft polymer particles we now return to the novel method of preparing the aqueous dispersion, i.e. the latex, comprising said graft polymer particles. Where used, the term "graft polymer latex" means the aqueous dispersion comprising the graft polymer particles, in contrast to the term "polymer latex" which means the aqueous dispersion of the latex polymer before grafting.

It is an essential feature of the invention process that the graft polymer latex is expressly not made by a sequential polymerization technique but instead one uses a water-based mixture of the preformed latex polymer and the preformed anionic organic polymer.

By "water-based" is meant that the components are carried in a liquid carrier medium of which water is the principal component. Preferably at least 50 weight %, more preferably at least 80 weight % of the liquid carrier medium is water; however minor amounts of organic liquids may optionally be present.

Surprisingly, the grafting of the present invention is effected in a mixture simple comprising the polymer latex, the anionic organic polymer, and free radical initiator, and there is no need to add any unreacted radically polymerizable monomers (free monomers). And according to a preferred embodiment, no free monomers are added to the water-based mixture.

The free radical initiator useful in the present process is any conventional free radical initiator, typically a free radical initiator that is usually employed for emulsion polymerization. The term "free radical initiator" as used herein also embraces initiator systems comprising more than one chemical compound. Typical initiators include oxidizing agents capable of forming a radical on the polymer chain, e.g. by oxidation of hydroxylic or carboxylic or sulfonic groups or of double bonds. Suitable free radical polymerization initiators include all those capable of triggering a free-radical emulsion polymerization. These are preferably persulfate salts, such as ammonium persulfate, potassium persulfate or sodium persulfate; azo compounds, e.g. 2,2'-azobisisobutyronitrile, 2,2-azobis-(2methyl)butanenitrile, 4,4'-azobis(4-cyanovaleric acid), 2-(t-butylazo)-2-cyanopropane, 2,2'azobis[2-methyl-N-(1,1 )-bis(hydroxymethyl)-2-hydroxyethyl]-propionamide, 2,2'azobis[2-methyl-N-hydroxyethyl)]-propionamide, and those described in Kirk-Othmer, Encylopedia of Chemical Technology, Fourth Edition, Volume 14, p. 451 - p. 452, Table 9; hydrogen peroxide; and organic peroxo compounds. The organic peroxo compounds may be selected from the following group: dialkyl peroxides (e.g. lauryl peroxide and examples given in: Kirk-Othmer, Encyclopedia of Chemical Technology, Fourth Edition, Volume 14, p. 445, Table 6), diacyl peroxides (benzoyl peroxide and examples given in: Kirk-Othmer, Encyclopedia of Chemical Technology, Fourth Edition, Volume 14, p. 440, Table 3), dialkyl peroxydicarbonates (examples are given in : Kirk-Othmer, Encyclopedia of Chemical Technology, Fourth Edition, Volume 14, p. 446, Table 7), tert-alkyl peroxyesters (examples are given in: Kirk-Othmer, Encyclopedia of Chemical Technology, Fourth Edition, Volume 14, p. 442, Table 4), OO-tert-alkyl O-alkyl monoperoxycarbonates (e.g. OO-tert-butyl-O-isopropyl monoperoxycarbonate), di(tert-alkylperoxy) ketals (examples are given in: Kirk-Othmer, Encyclopedia of Chemical Technology, Fourth Edition, Volume 14, p. 444, Table 5), di-tert-alkyl peroxides, tert-alkyl hydroperoxides (e.g. t-butyl hydroperoxide and examples given in: Kirk-Othmer, Encyclopedia of Chemical Technology, Fourth Edition, Volume 14, p. 447, Table 8), ketone peroxides (e.g methyl ethyl ketone peroxide, methyl isobutyl ketone peroxide, cyclohexanone peroxide, 2,4-pentanedione peroxide), and cumene hydroperoxide. It is also possible to use combined systems. In that case at least one persulfate and/or peroxide and/or hydroperoxide are used as initiators. These are combined with a reducing agent. Possible combinations may be the following: persulfate and/or peroxide and/or hydroperoxide with the sodium metal salt of hydroxymethanesulfinic acid, with the sodium metal salt of hydroxysulfinatoacetic acid, with the sodium metal salt of hydroxysulfonatoacetic acid, with sodium sulfite, with ascorbic acid, with sodium metabisulfite, and with combinations of these. Combined systems which additionally include a small amount of a metal compound which is soluble in the polymerization medium and whose metallic component is able to exist in a plurality of valence states are also used (e.g. Fenton's reagent or ascorbic acid/iron(II) sulfate/hydrogen peroxide, in which instead of the ascorbic acid it is also possible to use the sodium metal salt of hydroxysulfonatoacetic acid, sodium sulfite, sodium hydrogen sulfite, sodium disulfite, and combinations thereof. Instead of iron(II) sulfate it is possible to use Fe EDTA or another water-soluble Fe(II) salt as well as combinations of water-soluble Fe/V salts. Instead of hydrogen peroxide it is also possible to use organic peroxides and/or hydroperoxides or alkali metal peroxodisulfates and/or ammonium peroxodisulfate). Initiation with the aid of radiation and photoinitiators is also possible. Possible photoinitiators are given in Kirk-Othmer, Encyclopedia of Chemical Technology, Fourth Edition, Volume 14, p. 455, Table 10, and in: Kirk-Othmer, Encyclopedia of Chemical Technology, Fourth Edition, Volume 14, p. 457, Table 11. Preference is given to initiators based on persulfate salts such as sodium persulfate, potassium persulfate, ammonium persulfate; organic peroxo compounds, and combinations of peroxides or hydroperoxides with a reducing agent. Particular preference is given to persulfate salts such as sodium persulfate, potassium sulfate, ammonium persulfate. Most preferred is ammonium persulfate

The amount of free radical initiator employed is generally within the range of from 0.01 to 10 weight %, preferably from 0.05 to 5 weight %, more preferably from 0.1 to 1 to weight %, and most preferably from 0.1 to 0.5 weight %, each based on the weight of latex polymer (dry weight of the polymer latex).

Usually, the free radical initiator is water-soluble and thus, it is typically added to the process as an aqueous solution. The concentration of the free radical initiator in the aqueous solution is typically within the range of from 0.1 to 20 weight %, preferably from 1 to 15 weight %, and most preferably from 1 to 10 weight %.

The present process can be applied for effectively grafting anionic organic polymers to polymer latices which have a very liberal variation of average particle size, e.g. polymer latices of large particles as well as ones of low or intermediate average particle size. The average particle size (number average as measured by transmission electron microscopy (TEM)) of the polymer latex may vary between wide limits, a common range being 10 to 1,000 nm, more usually 30 to 600 nm, and typically 40 to 300 nm.

In one embodiment the polymer latex used in the invention method is the basically "as is" latex from emulsion polymerization (possibly modified by the addition or removal of water to adjust solids content). In another embodiment the polymer latex is purified to reduce the amount of residual monomers. Examples of purification methods include conventional purification techniques, such as steam stripping. Preferably, the amount of residual monomers is less than 0.1 weight %, more preferably less than 0.07 weight %, and most preferably less than 0.05 weight %, each based on the weight of the latex polymer (dry weight of polymer latex).

The solids content of the polymer latex used in the invention method is typically within the range of from 35 to 70 weight %, preferably from 40 to 70 weight %, more preferably from 40 to 60 weight %, and most preferably from 45 to 55 weight %.

With respect to the anionic organic polymer, it is possible to employ any existing anionic organic polymer fulfilling the requirements defined above. A commercially available dispersing agent may be used, and it is not necessary to especially prepare an anionic organic polymer for the grafting process - although this can be done if desired.

Due to its high negative charge, the anionic organic polymer is typically water-soluble and indeed is preferably in aqueous solution prior to commencement of the grafting process according to the invention process. Sometimes, the aqueous medium in which the anionic organic polymer finds itself will be acidic (pH < 7) and the acid groups will be carboxyl groups so that dissolution will be effected by raising the pH of the medium so as to neutralize the acid groups to form carboxylate anions by the addition of a base, such as an organic or inorganic base, examples of which include organic amines such as trialkylamines (e.g triethylamine, tributylamine), morpholine and alkanolamines, and inorganic bases such as ammonia, NaOH, KOH, and LiOH, or the acid groups include very strong acid groups such as sulphonic acid groups (pK 1 to 2) so that neutralization may not be necessary to achieve dissolution in the aqueous medium. In another embodiment of the present invention an anionic organic polymer comprising already deprotonated acid groups (e.g. carboxylate groups), i.e. acid salt groups, is introduced; and of course, such an anionic organic polymer is readily soluble in the aqueous medium.

The anionic organic polymer can be combined with the polymer latex in various ways - e.g in the form of an isolated solid from aqueous emulsion, aqueous suspension or organic solution polymerization (with subsequent basification if necessary to achieve water solubilization), in aqueous solution, aqueous emulsion or aqueous suspension (i.e. without isolating the solid anionic organic polymer and with subsequent basification if necessary to achieve water solubilization), in water-miscible and/or water immiscible organic solvent solution (again with subsequent basification if necessary to achieve water solubilization and eventually preferable removal of at least part of this organic solvent). Preferably, the anionic organic polymer is added in the form of an aqueous solution.

In the case of using an aqueous solution of the anionic organic polymer, the isolated solid anionic organic polymer may be added to water and solubilized if necessary using an appropriate base which has been introduced to the water prior to, during, or subsequent to the addition of anionic organic polymer. Another method is to form an aqueous solution of the anionic organic polymer directly by aqueous solution polymerization. More usually, however, an aqueous polymer solution is made by aqueous emulsion or suspension polymerization of the olefinically unsaturated monomer(s) to form an aqueous latex or suspension, followed by neutralization with a base to effect water-solubilization of the emulsion or suspension polymer thereof.

It is understood that both mixtures of various latex polymers (as "the" latex polymer) and mixtures of various anionic organic polymers (as "the" anionic organic polymer) may also be used in the present method and result in mixed products.

The amounts of polymer latex and anionic organic polymer used in the grafting process are determined to result in the relative amounts of latex polymer and anionic organic polymer in the graft polymer particles as desired and as having been described further above.

When carrying out the process of the invention, the preformed polymer latex, the preformed anionic organic polymer, and the free radical initiator are simply admixed. Any order of mixing is possible in principal, but preferably the anionic organic polymer is added to the polymer latex. Where neutralization of the anionic organic polymer is required to achieve water-solubility, this may be effected prior to or during adding it to the latex polymer or subsequent to such addition. Typically, the free radical initiator may be added to the polymer latex prior to, simultaneously with or after the addition of the anionic organic polymer. Alternatively, the radical initiator may first be contacted with the anionic organic polymer.

In a preferred embodiment of the present invention the total amount of unreacted radically polymerizable monomers, e.g. being entrained as residual monomers remaining from the formation of the latex polymer and/or the anionic organic polymer, is less than 0.1 weight %, based on the total dry weight of latex polymer and anionic organic polymer present in the water-based mixture.

Generally, the present process is conducted at a temperature within the range of from 0 to 130°C, typically from 60 to 130°C, preferably from 60 to 100°C, more preferably from 75 to 100°C, and most preferably from 80 to 90°C.

Typically, agitation such as stirring is employed.

Generally, the present process is conducted at atmospheric pressure; however, subatmospheric and superatmospheric pressures may be employed.

Usual reaction times range from 30 to 240 min, typically from 45 to 180 min, depending on the other process parameters.

The extent of grafting between the polymer latex particles and the anionic organic polymer can be controlled by variation of readily accessible and/or changeable parameters, such as temperature, the choice of initiator type, amount of initiator, type of anionic organic polymer and amount of the anionic organic polymer and feed profile variation for initiator as well as anionic organic polymer. The person skilled in the art will readily be able to carry out some routine experiments to adapt the reaction parameters to obtain a desired graft polymer latex.

The solids content of graft polymer latex according to the present invention is usually within the range of from about 10 to 70 weight %, preferably from 30 to 60 weight %, more preferably from 35 to 60 weight %, and most preferably from 40 to 55 weight %, depending on its intended end application. Solids content can, if desired, be adjusted by adding water or removing water (e.g. by distillation or ultrafiltration).

Due to the difficult analysis of the graft polymer particles it is not well understood how the grafting of the anionic organic polymer to the latex polymer is effected. Not intending to be bound by any theory, it is believed that the radical initiator will produce radical functions along the polymeric backbones of at least some of the anionic organic polymer molecules. During contact with the polymer latex the anionic organic polymer will become grafted to the latex polymer particles. The fact however that the graft polymer latex according to the invention significantly differs from a corresponding simple mixture of a corresponding latex polymer and a corresponding anionic organic polymer in its properties and performance, especially in combination with any pigments, is an unambiguous indication for any chemical reaction and/or any strong physical interaction that must have occurred during the grafting process of the present invention.

The graft polymer latex of the invention may be used "as is" or may be combined or formulated with one or more additives or components to provide formulated aqueous compositions therewith. Examples of such additives or components include defoamers, rheology control agents, thickeners, dispersing and stabilizing agents (usually surfactants), wetting agents, fillers, extenders, other polymers or resins, fungicides, bacterocides, coalescing and wetting solvents, plasticisers, anti-freeze agents, waxes, pigments, and crosslinking agents. The optional additional dispersing agents may be selected from those polymers that are listed above as examples of the anionic organic polymer. Preferably, the additional dispersing agent is the same type of polymer constituting the anionic organic polymer of the graft polymer particles. Aqueous compositions comprising the graft polymer latex in combination with any pigments especially benefit from the unique properties of the novel graft polymer latex.

The aqueous compositions comprising the graft polymer latex may e.g. be used, appropriately formulated if necessary, for the provision of films, polishes, varnishes, lacquers, paints, inks and adhesives. However, they are particularly useful and suitable for providing the basis of protective coatings for wooden substrates (e.g. wooden floors), and plastics, paper, cementitious and metal substrates, and also for inks applications. Preferred applications of aqueous compositions comprising the graft polymer latex in combination with appropriate pigments include paper coating, carpet applications (e.g. the coating of carpet backs), and paint. Most preferred is the use of an aqueous composition comprising the graft polymer latex in combination with appropriate pigments as binder in coating colors to coat paper and similar cellulosic materials.

The composition once applied may be allowed to dry naturally at ambient temperature, or the drying process may be accelerated by heat.

For example, in coating colors a significantly improved pigment-latex interaction was observed, i.e. a much better adsorption of the graft polymer latex to the pigment particles, relative to a coating color comprising a corresponding latex and a corresponding dispersing agent (the anionic organic polymer) in simple admixture ("standard coating color"). Due to the improved pigment-latex interaction latex penetration into the paper will be reduced, minimizing loss of latex and thus allowing a more effective use of the latex. This means that up to 20 weight % less latex may be used in a coating color comprising the graft polymer latex ("modified coating color") relative to a "standard coating color", the weight percentage being based on the weight of the latex polymer substrate in the "modified coating color" and the latex polymer in the "standard coating color". Moreover, the paper coated with a "modified coating color" exhibits increased surface strength, improved opacitiy, unchanged or improved brightness, and increased capillary adsorption during printing. Of course, the considerably improved pigment-latex interaction has similar beneficial effects in other applications of the graft polymer latex according to the present invention.

The present invention is now further illustrated, but in no way limited, by reference to the following example. Unless otherwise specified all parts, percentages, and ratios are on a weight basis.

### EXAMPLES

### Reference example 1: Preparation of an anionic organic polymer

930 g of deionized water were placed into a laboratory glass reactor equipped with stirrer, condenser, feeding connections, thermometer and jacket, in which heating and cooling water can be circulated. 575 g of maleic acid anhydride were placed into reactor, and the temperature was raised up to 65°C. Then 851 g of a 50 % aqueous solution of sodium hydroxide were fed into reactor within 1 h. During the feed the temperature was kept below 90°C. After all sodium hydroxide solution was fed, the temperature in the reactor was adjusted to 90°C. Afterwards two different feeds were started: 683 g of acrylic acid, and 62.1 g of sodium persulfate dissolved in 750 g of deionized water. During the feeds temperature in the reactor was kept at 90°C. The constant rate feed of acrylic acid lasted 3 h 50 min, and that of sodium persulfate solution 12 min longer. After the feeds had stopped the temperature in the reactor was kept at 90°C one more hour before cooling to room temperature. After cooling the product was neutralized to pH 7 using a 50 % aqueous solution of sodium hydroxide.

1500 g of the product solution were placed into a round-bottomed glass reactor equipped with a condenser. An electrical heating mantle was used for heating. The solution was heated until refluxing started. 150 g of a 50 % aqueous solution of hydrogen peroxide were fed into the reactor within 2 h. Refluxing was kept up during the feeding as well as two more hours after hydrogen peroxide feed had stopped. After this the solution of the anionic organic polymer was let to cool to room temperature.
The final solution had a solids content of about 42.1 % and a viscosity of about 230 m Pas..

### Reference example 2: Preparation of a PEO-modified anionic organic polymer

133 g of deionized water were placed into a laboratory glass reactor equipped with stirrer, condenser, feeding connections, thermometer and jacket, in which heating and cooling water can be circulated. 82.1 g of maleic acid anhydride were placed into reactor, and the temperature was raised up to 65°C. 122 g of a 50 % aqueous solution of sodium hydroxide were fed into reactor with 1 h. During the feed the temperature was kept below 80°C. After all sodium hydroxide solution was fed, the temperature in the reactor was adjusted to 92°C and 97.1 g of Pluriol E9000 (polyethylene oxide having a weight average molecular weight of about 9.000, supplied by BASF AG) dissolved in 146 g of deionised water were placed into the reactor. Afterwards two different feeds were started: 97.6 g of acrylic acid, and 8.87 g of sodium persulfate dissolved in 107 g of deionized water. During the feeds the temperature in the reactor was kept at 92°C. The constant rate feed of acrylic acid lasted 3 h 45 min, and that of sodium persulfate solution 15 min longer. After the feeds had stopped the temperature in the reactor was kept at 92°C one more hour before cooling to room temperature. After cooling the product was neutralized to pH 7.1 using a 50 % aqueous solution of sodium hydroxide.

675 g of the product solution were placed into a round-bottomed glass reactor equipped with a condenser. An electrical heating mantle was used for heating. The solution was heated until refluxing started. 67.5 g of a 50 % aqueous solution of hydrogen peroxide were fed into the reactor within 54 min. Refluxing was kept up during the feeding as well as two more hours after hydrogen peroxide feed had stopped. Afterwards the solution of the PEO-modified anionic organic polymer was let to cool to room temperature. The solids content of the product was 38 % at this stage. Finally, the product was slightly concentrated by distilling it in a rotavapor.

The final solution had a solids content of about 41 % and a viscosity of about 371 mPas.

### Example 3: Grafting the anionic organic polymer to the latex to prepare the graft polymer latex

2,000 g of an organic latex (number average particle size by TEM of about 110 nm, solids content of 50 %) prepared by emulsion polymerization of 330 g of butadiene, 630 g of styrene and 40 g of acrylic acid were charged into a temperature-controlled reaction vessel equipped with two inlets and a stirrer. The organic latex was heated to about 85°C. Then 20 g of a 5 % aqueous solution of ammonium persulfate were added to the latex under stirring within 10 min. Afterwards, further 20 g of the 5 % aqueous solution of ammonium persulfate and 480 g of a 10 % aqueous solution of the anionic organic polymer of Reference Example 1 were added to the latex under stirring within 1 h. After completion of the addition of both solutions the graft polymer latex was stirred at 85°C for 1 h. Then, the graft polymer latex was cooled and filtered. The graft polymer latex has a number average particle size by TEM of about 110 nm and a solids content of 40.3%.

### Example 4: Grafting the PEO-modified anionic organic polymer to the latex to prepare the graft polymer latex

1,458 g of an organic latex (number average particle size by TEM of about 110 nm, solids content of 50 %) prepared by emulsion polymerization of 241 g of butadiene, 459 g of styrene and 29 g of acrylic acid were charged into a temperature-controlled reaction vessel equipped with two inlets and a stirrer. The organic latex was heated to about 85°C. Then 14 g of a 5 % aqueous solution of ammonium persulfate were added to the latex under stirring within 10 min. Afterwards, further 14 g of the 5 % aqueous solution of ammonium persulfate and 350 g of a 10 % aqueous solution of the PEO-modified anionic organic polymer of Reference Example 2 were added to the latex under stirring within 1 h. After completion of the addition of both solutions the graft polymer latex was stirred at 85°C for 1 h. Then, the graft polymer latex was cooled and filtered. The graft polymer latex has a number average particle size by TEM of about 110 nm and a solids content of about 41.5 %.

### Comparative Example 4: Dispersing inorganic pigment with a blend of anionic organic polymer and latex

First, 3,822 g of undispersed PCC (precipitated calcium carbonate) pigment (Opacarb A40, supplied by Special Minerals Inc, Äänekoski, Finland) was weighed. The pigment was supplied in the form of a wet filter cake having a solids content of 68.4 %, and the weighed amount therefore equaled 2,614 g of dry pigment. Then, 6.68 parts of the latex polymer which was used in Example 3 to prepare the graft polymer latex and 0.82 parts of the anionic organic polymer of Reference Example 1 (dispersing agent) were weighed against 100 parts of dry pigment. The weighed amount of the latex and the solution of the anionic organic polymer were 349 g of latex having a solids content of 50.0 % and 50.9 g of the solution of the anionic organic prepared in Reference Example 1 having a solids content of 42.1 %. The latex and the anionic organic polymer were blended together in a L4RT Silverson laboratory mixer equipped with a screen hole mixing head. The mixing time was 30 min at a mixing rate of 8,800 rpm. During the mixing the temperature was raised to 50°C.

The blend of the latex and the anionic organic polymer was placed in a 10 l round-bottomed stainless steel container. Addition of the inorganic pigment into the container was initiated progressively by mixing the blend of the latex and the anionic organic polymer with a Diaf FFB H3 dissolver (at 6,800 rpm). The slurry maintained its ability to flow during the whole addition. After adding all inorganic pigment the pH of the slurry was adjusted to 9.0 with 0.5 M HCl.

The slurry was then additionally mixed by using a L4RT Silverson laboratory mixer equipped with a screen hole mixing head. The mixing time was 15 min, the mixing rate 8,800 rpm and the temperature was maintained at 60°C or below. The solids content of the slurry was 66 % after this stage.

The slurry was centrifuged with a Sorvall Instruments RC5C centrifuge equipped with an SS-34 rotor for 40 min at 26,500 G and 25 ºC. The latex content of the liquid phase was then analyzed with a Shimadzu TOC-V CPH Total Organic Carbon (TOC) analyzer - the samples were diluted at a ratio of 1 to 250 and 1 to 500, respectively. The total organic carbon (TOC) concentration of 6 parts of latex polymer and 1 part anionic organic polymer, when totally in water, is theoretically 84.1 g/l. The measured TOC level for the liquid phase of the above slurry was 62.3 g/l. The difference (21.8 g/l) was assumed to have been adsorbed onto the pigment. It constituted an about 25 % adsorption rate of the blend onto the inorganic pigment.

### Example 5: Dispersing inorganic pigment with the graft polymer latex

First, 3,521 g wet, undispersed PCC pigment (Opacarb A40, supplied by Special Minerals Inc, Äänekoski, Finland) was weighed. The pigment was supplied in the form of a wet filter cake having a solids content of 71.6 %, and the weighed amount therefore equalled 2,521 g of dry pigment. Then, 7 parts of the graft polymer (dry weight of graft polymer latex) prepared in Example 3 were weighed against 100 parts of the dry pigment. The weighed amount of the graft polymer latex was 438 g having a solids content of 40.3 %.

The total amount of the graft polymer latex was placed in a 10 | round bottomed stainless steel container. Addition of the inorganic pigment into the container was initiated progressively by mixing the graft polymer latex with a Diaf FFB H3 dissolver (at 6,800 rpm). After an addition of about 80 % of the wet undispersed filter cake (about 2,800 g), the slurry turned very thick (toothpaste like). The anionic organic polymer of Reference Example 1 (dispersing agent) was separately added in an amount of 0.3 parts (per 100 parts of dry pigment, which amounts to 18.0 g of the solution of the anionic organic polymer having a solids content of 42.1 %) to restore the flowability of the slurry.

The rest of the undispersed pigment, about 700 g of wet filter cake, was then added into the container. The slurry remained flowable in spite of this addition. The pH of the slurry was adjusted to 9.0 with 0.5 M HCl. Finally, 0.2 parts of the anionic organic polymer of Reference Example 1 were added (12.0 g of the solution, solids content 42.1 %) to further improve the rheological performance of the slurry and to improve its stability.

The pigment-latex slurry was then dispersed using a L4RT Silverson laboratory mixer equipped with a screen hole mixing head. The mixing time was 15 min, the mixing rate 8,800 rpm and the temperature was maintained at 60°C or below. The solids content of the slurry was 66 % after this stage.

The slurry was centrifuged with a Sorvall Instruments RC5C centrifuge equipped with an SS-34 rotor for 40 min at 26,500 G and 25 ºC. The latex content of the liquid phase was then analyzed with a Shimadzu TOC-V CPH Total Organic Carbon (TOC) analyzer - the samples were diluted at a ratio of 1 to 250 and 1 to 500, respectively. Analysis against the calibration curve of the graft polymer latex revealed that about 93 % of the latex were adsorbed onto the pigment.

## Claims

1. A method of grafting an anionic organic polymer to an organic polymer in latex form, which method comprises forming a water-based mixture of (1) a latex of an organic polymer, (2) an anionic organic polymer, and (3) a free radical initiator, and effecting grafting between said latex polymer and said anionic organic polymer
**characterized in that** the anionic organic polymer is
(i) an anionic homopolymer or anionic random copolymer wherein at least 50 mole % of the repeating units are repeating units that bear at least one acid group or acid salt group or
(ii) a graft or block copolymer comprising a segment consisting of a anionic homopolymer or anionic random copolymer as defined in (i).

2. The method of claim 1 wherein the latex polymer is derived from one or more radically polymerizable monomers.

3. The method of claim 2 wherein the latex polymer is derived from one or more monomers selected from styrene, butadiene, acrylic acid, methacrylic acid, maleic acid, fumaric acid, itaconic acid, acrylonitrile, chloroprene, vinylpyridines, acrylates, and methacrylates.

4. The method of claim 2 or 3 wherein the latex polymer bears acid groups, preferably carboxylic acid groups, and/or the corresponding salt groups.

5. The method of any of claims 2 to 4 wherein the latex polymer is derived from one or more conjugated diene monomers and optionally further comonomers.

6. The method of claim 4 or 5 wherein the latex polymer is a carboxylated styrene/butadiene copolymer optionally comprising further comonomers.

7. The method of claim 6 wherein the carboxylated styrene/butadiene copolymer is a styrene/butadiene/acrylic acid copolymer.

8. The method of any of the preceding claims wherein the anionic organic polymer is water-soluble.

9. The method of any of the preceding claims wherein at least 70 mole % of the repeating units of the anionic homopolymer or anionic random copolymer are repeating units that bear at least one acid group or acid salt group.

10. The method of claim 9 wherein at least 80 mole % of the repeating units of the anionic homopolymer or anionic random copolymer are repeating units that bear at least one acid group or acid salt group.

11. The method of claim 10 wherein 100 mole % of the repeating units of the anionic homopolymer or anionic random copolymer are repeating units that bear at least one acid group or acid salt group.

12. The method of any of the preceding claims wherein the segment consisting of the anionic homopolymer or anionic random copolymer constitutes at least 50 weight % of the anionic organic polymer.

13. The method of any of the preceding claims wherein the acid groups or acid salt groups are selected from carboxylic acid groups, sulfonic acid groups, phosphorous-containing acid groups, including their corresponding salt forms, and a mixture of any of said groups.

14. The method of any of the preceding claims wherein the anionic homopolymer or anionic random copolymer is derived from one or more radically polymerizable monomers.

15. The method of claim 14 wherein the anionic homopolymer or anionic random copolymer is derived from one or more monomers selected from
(a) anionic ethylenically unsaturated monomers and precursors thereof,
(b) functional ethylenically unsaturated monomers that create anionic charge after hydrolysis of the resulting polymer, and
(c) copolymerizable ethylenically unsaturated monomers that are different from (a) and (b),
provided that the anionic homopolymer or anionic random copolymer is derived from one or more monomers of type (a) or (b) and the sum of monomers of type (a) and (b) amounts to at least 50 mole % of the total monomers.

16. The method of claim 15 wherein the anionic homopolymer or anionic random copolymer is derived from one or more monomers selected from
(a) ethylenically unsaturated carboxylic acids, ethylenically unsaturated sulfonic acids, ethylenically unsaturated monomers comprising phosphorous-containing acid groups, and their corresponding salt forms, and ethylenically unsaturated carboxylic acid anhydrides,
(b) amides, nitriles, and esters of ethylenically unsaturated mono or dicarboxylic acids; and
(c) styrenes, vinyl esters, vinyl ethers, N-vinylamides, and N-vinylamines,
provided that the anionic homopolymer or anionic random copolymer is derived from one or more monomers of type (a) or (b) and the sum of monomers of type (a) and (b) amounts to at least 50 mole % of the total monomers.

17. The method of claims 15 or 16 wherein the anionic homopolymer or anionic random copolymer is derived from one or more monomers selected from monomers of type (a) and (b).

18. The method of claim 17 wherein the anionic homopolymer or anionic random copolymer is derived from one or more monomers selected from monomers of type (a).

19. The method of claim 18 wherein the anionic homopolymer or anionic random copolymer is an anionic random copolymer which is an acrylic acid/maleic acid copolymer.

20. The method of any of the preceding claims wherein the anionic organic polymer is a graft copolymer comprising at least one uncharged segment in addition to the segment consisting of the anionic homopolymer or anionic random copolymer.

21. The method of claim 20 wherein the uncharged segment is a poly(alkylene oxide) chain, preferably a poly(ethylene oxide) chain.

22. The method of any of the preceding claims wherein no radically polymerizable monomers are added to the water-based mixture.

23. The method of any of the preceding claims wherein the total amount of unreacted radically polymerizable monomers in the water-based mixture is less than 0.1 weight % based on the total dry weight of latex polymer and anionic organic polymer.

24. The method of any of the preceding claims wherein the free radical initiator is ammonium persulfate.

25. An aqueous dispersion comprising graft polymer particles which dispersion is obtainable by the method of any of the preceding claims.

26. An aqueous dispersion comprising graft polymer particles wherein the graft substrate of the graft polymer particles comprises a latex polymer and the side chains of the graft polymer particles comprise an anionic organic polymer
**characterized in that** the anionic organic polymer is
(i) an anionic homopolymer or anionic random copolymer wherein at least 70 mole % of the repeating units are repeating units that bear at least one acid group or acid salt group or
(ii) a graft or block copolymer comprising a segment consisting of a anionic homopolymer or anionic random copolymer as defined in (i),
and the latex polymer is derived from one or more conjugated diene monomers and optionally further comonomers.

27. The aqueous dispersion of claim 26 wherein the latex polymer and the anionic organic polymer are defined as in any of claims 1 to 21.

## Patentansprüche

1. Verfahren zum Pfropfen eines anionischen organischen Polymers auf ein organisches Polymer in Latexform, wobei das Verfahren das Ausbilden einer wasserbasierten Mischung von (1) einem Latex eines organischen Polymers, (2) einem anionischen organischen Polymer und (3) einem Radikalstarter und Bewirken der Pfropfung zwischen diesem Latexpolymer und diesem anionischen organischen Polymer umfasst,
**dadurch gekennzeichnet, dass** das anionische organische Polymer
(i) ein anionisches Homopolymer oder anionisches statistisches Copolymer, worin mindestens 50 mol-% der sich wiederholenden Einheiten sich wiederholende Einheiten sind, die mindestens eine Säuregruppe oder Säuresalzgruppe tragen, oder
(ii) ein Pfropf- oder Blockcopolymer, das ein Segment enthält, das aus einem anionischen Homopolymer oder einem anionischen statistischen Copolymer wie in (i) definiert ist besteht,
ist.

2. Verfahren nach Anspruch 1, wobei sich das Latexpolymer von einem oder mehreren radikalisch polymerisierbaren Monomeren ableitet.

3. Verfahren nach Anspruch 2, wobei sich das Latexpolymer von einem oder mehreren Monomeren ableitet, die ausgewählt sind aus Styrol, Butadien, Acrylsäure, Methacrylsäure, Maleinsäure, Fumarsäure, Itaconsäure, Acrylnitril, Chloropren, Vinylpyridinen, Acrylaten und Methacrylaten.

4. Verfahren nach Anspruch 2 oder 3, wobei das Latexpolymer Säuregruppen, vorzugsweise Carbonsäuregruppen, und/oder die korrespondierenden Salzgruppen trägt.

5. Verfahren nach einem der Ansprüche 2 bis 4, wobei das Latexpolymer sich von einem oder mehreren konjugierten Dienmonomeren und optional weiteren Comonomeren ableitet.

6. Verfahren nach Anspruch 4 oder 5, wobei das Latexpolymer ein carboxyliertes Styrol/Butadien-Copolymer, das optional weitere Comonomere enthält, ist.

7. Verfahren nach Anspruch 6, wobei das carboxylierte Styrol/Butadien-Copolymer ein Styrol/Butadien/Acrylsäure-Copolymer ist.

8. Verfahren nach einem der vorstehenden Ansprüche, wobei das anionische organische Polymer wasserlöslich ist.

9. Verfahren nach einem der vorstehenden Ansprüche, wobei mindestens 70 mol-% der sich wiederholenden Einheiten des anionischen Homopolymers oder anionischen statistischen Copolymers sich wiederholende Einheiten sind, die mindestens eine Säuregruppe oder Säuresalzgruppe tragen.

10. Verfahren nach Anspruch 9, wobei mindestens 80 mol-% der sich wiederholenden Einheiten des anionischen Homopolymers oder anionischen statistischen Copolymers sich wiederholende Einheiten sind, die mindestens eine Säuregruppe oder Säuresalzgruppe tragen.

11. Verfahren nach Anspruch 10, wobei 100 mol-% der sich wiederholenden Einheiten des anionischen Homopolymers oder anionischen statistischen Copolymers sich wiederholende Einheiten sind, die mindestens eine Säuregruppe oder Säuresalzgruppe tragen.

12. Verfahren nach einem der vorstehenden Ansprüche, wobei das Segment, das aus dem anionischen Homopolymer oder anionischen statistischen Copolymer besteht, mindestens 50 Gew.-% des anionischen organischen Polymers ausmacht.

13. Verfahren nach einem der vorstehenden Ansprüche, wobei die Säuregruppen oder Säuresalzgruppen ausgewählt sind aus Carbonsäuregruppen, Sulfonsäuregruppen, phosphorhaltigen Säuregruppen, einschließlich deren korrespondierenden Salzformen, und einer Mischung aus irgendeiner dieser Gruppen.

14. Verfahren nach einem der vorstehenden Ansprüche, wobei das anionische Homopolymer oder anionische statistische Copolymer sich von einem oder mehreren radikalisch polymerisierbaren Monomeren ableitet.

15. Verfahren nach Anspruch 14, wobei das anionische Homopolymer oder anionische statistische Copolymer sich von einem oder mehreren Monomeren ableitet, die ausgewählt sind aus
(a) anionischen ethylenisch ungesättigten Monomeren und Vorläufern derselben,
(b) funktionellen ethylenisch ungesättigten Monomeren, die nach Hydrolyse des resultierenden Polymers anionische Ladung erzeugen, und
(c) copolymerisierbaren ethylenisch ungesättigten Monomeren, die sich von (a) und (b) unterscheiden,
vorausgesetzt, dass das anionische Homopolymer oder anionische statistische Copolymer sich von einem oder mehreren Monomeren des Typs (a) oder (b) ableitet und die Summe der Monomere des Typs (a) und (b) sich auf mindestens 50 mol-% der gesamten Monomere beläuft.

16. Verfahren nach Anspruch 15, wobei das anionische Homopolymer oder anionische statistische Copolymer sich von einem oder mehreren Monomeren ableitet, die ausgewählt sind aus
(a) ethylenisch ungesättigten Carbonsäuren, ethylenisch ungesättigten Sulfonsäuren, ethylenisch ungesättigten Monomeren, die phosphorhaltige Säuregruppen enthalten, und ihren korrespondierenden Salzformen und ethylenisch ungesättigten Carbonsäureanhydriden,
(b) Amiden, Nitrilen und Estern von ethylenisch ungesättigten Mono- oder Dicarbonsäuren und
(c) Styrolen, Vinylestern, Vinylethern, N-Vinylamiden und N-Vinylaminen,
vorausgesetzt, dass das anionische Homopolymer oder anionische statistische Copolymer sich von einem oder mehreren Monomeren des Typs (a) oder (b) ableitet und die Summe der Monomere des Typs (a) und (b) sich auf mindestens 50 mol-% der gesamten Monomere beläuft.

17. Verfahren nach Anspruch 15 oder 16, wobei das anionische Homopolymer oder anionische statistische Copolymer sich von einem oder mehreren Monomeren ableitet, die aus Monomeren des Typs (a) und (b) ausgewählt sind.

18. Verfahren nach Anspruch 17, wobei das anionische Homopolymer oder anionische statistische Copolymer sich von einem oder mehreren Monomeren ableitet, die aus Monomeren des Typs (a) ausgewählt sind.

19. Verfahren nach Anspruch 18, wobei das anionische Homopolymer oder anionische statistische Copolymer ein anionisches statistisches Copolymer ist, das ein Acrylsäure/Maleinsäure-Copolymer ist.

20. Verfahren nach einem der vorstehenden Ansprüche, wobei das anionische organische Polymer ein Pfropfcopolymer ist, das mindestens ein ungeladenes Segment zusätzlich zu dem Segment enthält, das aus dem anionischen Homopolymer oder anionischen statistischen Copolymer besteht.

21. Verfahren nach Anspruch 20, wobei das ungeladene Segment eine Poly(alkylenoxid)kette, vorzugsweise eine Poly(ethylenoxid)kette ist.

22. Verfahren nach einem der vorstehenden Ansprüche, wobei keine radikalisch polymerisierbaren Monomere zu der wasserbasierten Mischung gegeben werden.

23. Verfahren nach einem der vorstehenden Ansprüche, wobei die Gesamtmenge der nichtumgesetzten radikalisch polymerisierbaren Monomere in der wasserbasierten Mischung weniger als 0,1 Gew.-%, bezogen auf das Gesamttrockengewicht von Latexpolymer und anionischem organischem Polymer, beträgt.

24. Verfahren nach einem der vorstehenden Ansprüche, wobei der Radikalstarter Ammoniumpersulfat ist.

25. Wässrige Dispersion, die Pfropfpolymerteilchen enthält und nach dem Verfahren nach einem der vorstehenden Ansprüche erhältlich ist.

26. Wässrige Dispersion, die Pfropfpolymerteilchen enthält, wobei das Pfropfsubstrat der Pfropfpolymerteilchen ein Latexpolymer enthält und die Seitenketten der Pfropfpolymerteilchen ein anionisches organisches Polymer enthalten,
**dadurch gekennzeichnet, dass** das anionische organische Polymer
(i) ein anionisches Homopolymer oder anionisches statistisches Copolymer, worin mindestens 70 mol-% der sich wiederholenden Einheiten sich wiederholende Einheiten sind, die mindestens eine Säuregruppe oder Säuresalzgruppe tragen, oder
(ii) ein Pfropf- oder Blockcopolymer, das ein Segment enthält, das aus einem anionischen Homopolymer oder einem anionischen statistischen Copolymer wie in (i) definiert besteht,
ist und das Latexpolymer sich von einem oder mehreren konjugierten Dienmonomeren und optional weiteren Comonomeren ableitet.

27. Wässrige Dispersion nach Anspruch 26, wobei das Latexpolymer und das anionische organische Polymer wie in einem der Ansprüche 1 bis 21 definiert sind.

## Revendications

1. Procédé de greffage d'un polymère organique anionique à un polymère organique sous forme de latex, ledit procédé comprenant la formation d'un mélange à base d'eau contenant (1) un latex d'un polymère organique, (2) un polymère organique anionique et (3) un initiateur de radicaux libres, et la mise en oeuvre du greffage entre ledit polymère sous forme de latex et ledit polymère organique anionique,
**caractérisé en ce que** le polymère organique anionique est
(i) un homopolymère anionique ou un copolymère anionique statistique dans lequel au moins 50 % en mole des motifs répétitifs sont des motifs répétitifs portant au moins un groupe acide ou un groupe de sel diacide, ou
(ii) un copolymère greffé ou séquencé comprenant un segment constitué par un homopolymère anionique ou un copolymère anionique statistique tel que défini en (i) .

2. Procédé selon la revendication 1, dans lequel le polymère sous forme de latex est obtenu à partir d'un ou de plusieurs monomères polymérisables par voie radicalaire.

3. Procédé selon la revendication 2, dans lequel le polymère sous forme de latex est obtenu à partir d'un ou de plusieurs monomères choisis parmi le styrène, le butadiène, l'acide acrylique, l'acide méthacrylique, l'acide maléique, l'acide fumarique, l'acide itaconique, l'acrylonitrile, le chloroprène, les vinylpyridines, les acrylates et les méthacrylates.

4. Procédé selon la revendication 2 ou 3, dans lequel le polymère sous forme de latex porte des groupes acides, de préférence des groupes acides carboxyliques, et/ou des groupes correspondants sous forme de sels.

5. Procédé selon l'une quelconque des revendications 2 à 4, dans lequel le polymère sous forme de latex est obtenu à partir d'un ou de plusieurs monomères diéniques conjugués et facultativement d'autres comonomères.

6. Procédé selon la revendication 4 ou 5, dans lequel le polymère sous forme de latex est un copolymère carboxylé de styrène/butadiène comprenant facultativement d'autres comonomères.

7. Procédé selon la revendication 6, dans lequel le copolymère carboxylé de styrène/butadiène est un copolymère de styrène/butadiène/acide acrylique.

8. Procédé selon l'une quelconque des revendications précédentes, dans lequel le polymère organique anionique est hydrosoluble.

9. Procédé selon l'une quelconque des revendications précédentes, dans lequel au moins 70 % en mole des motifs répétitifs de l'homopolymère anionique ou du copolymère anionique statistique sont des motifs répétitifs portant au moins un groupe acide ou un groupe de sel d'acide.

10. Procédé selon la revendication 9, dans lequel au moins 80 % en mole des motifs répétitifs de l'homopolymère anionique ou du copolymère anionique statistique sont des motifs répétitifs portant au moins un groupe acide ou un groupe de sel d'acide.

11. Procédé selon la revendication 10, dans lequel 100 % en mole des motifs répétitifs de l'homopolymère anionique ou du copolymère anionique statistique sont des motifs répétitifs portant au moins un groupe acide ou un groupe de sel d'acide.

12. Procédé selon l'une quelconque des revendications précédentes, dans lequel le segment constitué par l'homopolymère anionique ou le copolymère anionique statistique constitue au moins 50 % en poids du polymère organique anionique.

13. Procédé selon l'une quelconque des revendications précédentes, dans lequel les groupes acides ou les groupes de sel d'acide sont choisis parmi les groupes acides carboxyliques, les groupes acides sulfoniques, les groupes acides contenant du phosphore, y compris leurs formes correspondantes de sel, et un mélange de l'un quelconque desdits groupes.

14. Procédé selon l'une quelconque des revendications précédentes, dans lequel l'homopolymère anionique ou le copolymère anionique statistique est obtenu à partir d'un ou de plusieurs monomères polymérisables par voie radicalaire.

15. Procédé selon la revendication 14, dans lequel l'homopolymère anionique ou le copolymère anionique statistique est obtenu à partir d'un ou de plusieurs monomères choisis parmi :
(a) les monomères anioniques à insaturation éthylénique et leurs précurseurs,
(b) les monomères fonctionnels à insaturation éthylénique qui créent une charge anionique après hydrolyse du polymère résultant, et
(c) les monomères copolymérisables à insaturation éthylénique qui sont différents des monomères de (a) et (b),
à condition que l'homopolymère anionique ou le copolymère anionique statistique soit obtenu à partir d'un ou de plusieurs monomères de type (a) ou (b) et que la somme des monomères de type (a) et (b) s'élève à au moins 50 % en mole des monomères totaux.

16. Procédé selon la revendication 15, dans lequel l'homopolymère anionique ou le copolymère anionique statistique est obtenu à partir d'un ou de plusieurs monomères choisis parmi :
(a) les acides carboxyliques à insaturation éthylénique, les acides sulfoniques à insaturation éthylénique, les monomères à insaturation éthylénique comprenant des groupes acides contenant du phosphore, et leurs formes correspondantes de sel, et les anhydrides d'acides carboxyliques à insaturation éthylénique ;
(b) les amides, les nitriles et les esters d'acides mono- ou di-carboxyliques à insaturation éthylénique ; et
(c) les styrènes, les esters vinyliques, les vinyl éthers, les N-vinylamides et les N-vinylamines,
à condition que l'homopolymère anionique ou le copolymère anionique statistique soit obtenu à partir d'un ou de plusieurs monomères de type (a) ou (b) et que la somme des monomères de type (a) et (b) s'élève à au moins 50 % en mole des monomères totaux.

17. Procédé selon la revendication 15 ou 16, dans lequel l'homopolymère anionique ou le copolymère anionique statistique est obtenu à partir d'un ou de plusieurs monomères choisis parmi les monomères de type (a) et (b).

18. Procédé selon la revendication 17, dans lequel l'homopolymère anionique ou le copolymère anionique statistique est obtenu à partir d'un ou de plusieurs monomères choisis parmi les monomères de type (a).

19. Procédé selon la revendication 18, dans lequel l'homopolymère anionique ou le copolymère anionique statistique est un copolymère anionique statistique qui est un copolymère d'acide acrylique/acide maléique.

20. Procédé selon l'une quelconque des revendications précédentes, dans lequel le polymère organique anionique est un copolymère greffé comprenant au moins un segment non chargé en plus du segment constitué par l'homopolymère anionique ou le copolymère anionique statistique.

21. Procédé selon la revendication 20, dans lequel le segment non chargé est une chaîne de poly(oxyde d'alkylène), de préférence une chaîne de poly(oxyde d'éthylène) .

22. Procédé selon l'une quelconque des revendications précédentes, dans lequel aucun monomère polymérisable par voie radicalaire n'est ajouté au mélange à base d'eau.

23. Procédé selon l'une quelconque des revendications précédentes, dans lequel la quantité totale de monomères polymérisables par voie radicalaire n'ayant pas réagi dans le mélange à base d'eau est inférieure à 0,1 % en poids sur la base du poids sec total du polymère sous forme de latex et du polymère organique anionique.

24. Procédé selon l'une quelconque des revendications précédentes, dans lequel l'initiateur de radicaux libres est le persulfate d'ammonium.

25. Dispersion aqueuse comprenant des particules de polymère greffé, ladite dispersion pouvant être obtenue par le procédé selon l'une quelconque des revendications précédentes.

26. Dispersion aqueuse comprenant des particules de polymère greffé, dans laquelle le substrat greffé des particules de polymère greffé comprend un polymère sous forme de latex et les chaînes latérales des particules de polymère greffé comprennent un polymère organique anionique,
**caractérisée en ce que** le polymère organique anionique est
(i) un homopolymère anionique ou un copolymère anionique statistique dans lequel au moins 70 % en mole des motifs répétitifs sont des motifs répétitifs portant au moins un groupe acide ou un groupe de sel diacide, ou
(ii) un copolymère greffé ou séquencé comprenant un segment constitué par un homopolymère anionique ou un copolymère anionique statistique tel que défini en (i),
et le polymère sous forme de latex est obtenu à partir d'un ou de plusieurs monomères diéniques conjugués et facultativement d'autres comonomères.

27. Dispersion aqueuse selon la revendication 26, dans laquelle le polymère sous forme de latex et le polymère organique anionique sont tels que définis dans l'une quelconque des revendications 1 à 21.
